# EUROPEAN PATENT SPECIFICATION

(11) **EP 4 073 453 B1**
(45) Date of publication and mention of the grant of the patent: **13.03.2024**
(21) Application number: 20815908.7
(22) Date of filing: 23.11.2020
(51) Int. Cl.: F28F 1/40, F28F 13/02, F28F 21/08

(54) **INTERNALLY PROFILED TUBES**
INNEN PROFILIERTE ROHRE
TUBES À PROFIL INTERNE

(30) Priority: 09.12.2019 GB 201917960
(43) Date of publication of application: 19.10.2022
(73) Proprietor: Paralloy Limited, Billingham TS23 4DA (GB)
(72) Inventor: FLAHAUT, Dominique, Billingham, Durham TS23 4DA (GB); LEWIS, Robert, Brackley, Northamptonshire NN13 7UG (GB)
(74) Representative: HGF
(86) International application number: PCT/GB2020/052981
(87) International publication number: WO 2021/116656

(56) References cited:
- EP-A1- 1 561 795
- EP-A1- 2 248 581
- CN-B- 101 824 333
- US-A- 4 314 587

## Description

The present invention relates to internally profiled variable pitch tubes or pipes made of steel. The terms tube and pipe are used synonymously in the context of this invention. These tubes are used in the petrochemical industry to crack oil, gas and shale feedstocks into simple hydrocarbons such as ethylene and similar products.

### BACKGROUND

A considerable function of the petrochemical industry is to produce simple hydrocarbons such as ethylene and similar products through the process of `cracking' oil, gas and shale feedstocks. These hydrocarbon products are in turn the starting materials for a wide range of chemicals used in the chemical industry, particularly as starting materials in the plastics industry.

The feedstock is cracked by heating to very high temperature inside steel tubes. The thermal cracking reaction may be facilitated by introducing the hydrocarbon feedstock i.e. the oil, gas or shale feedstock into the cracking tube along with steam. The gases pass through the steel tubes at high velocity. Reactors of this type are frequently known as ethylene crackers.

Ethylene steam cracker furnaces are widely used in the petrochemical industry for the conversion of the feed fluid to desired products via thermal cracking. The furnace is made mainly of coils/tubes which act as a heater for the fluid passing through them. Heat transfer to the fluid from the furnace/coils/tubes enables the cracking of the fluid passing within to produce the desired cracked products.

The tube walls are externally heated, usually using a furnace, and are normally heated above 900 °C. The steel tubes conduct the heat to the fluid passing within them and more specially to the fluid in contact with the internal wall of the tubes. This means that there is a temperature gradient within the fluid passing along i.e. through the tubes. The consequence of this is that the fluid in contact with the internal wall of the tube is hotter than the fluid in the centre of the tube. This temperature gradient can create problems in terms of both cracking efficiency and the production of unwanted side products.

With regards to the productivity of the cracking process as a whole, a temperature gradient within the tubes means that the cracking reaction is not necessarily completed in the centre of the tube, whereas near the tube wall the conversion may progress to completion. Consequently, the overall conversion of the fluid into desired products such as ethylene or propylene isn't as high as it might be if the temperature gradient did not exist.

Another problem is that conversion near the wall may progress beyond completion and result in side products. Over a period of time, the pipes may become subject to fouling with coke and other deposits due to the uneven heating. In some cases, there is also a temperature gradient and consequently a concentration gradient of the products within the fluid along the length of the pipe due to variations in the temperature of the fluid.

Pipes used in thermal cracking processes are frequently more than simply hollow cylindrical tubes. Frequently such pipes are provided with internal protrusions, lugs or baffles in order to interrupt the fluid flow and to promote mixing. There are a number of different approaches to this but frequently the provision of such internal protrusions is complicated to manufacture. Some of these protrusions actually provide sites for the deposition and accumulation of coke and other solids as side products of the reaction.

CN 101824333, on which the preamble of claim 1 is based, discloses a field synergy effect-based cracking furnace tube. The disclosed tube is not circular and has at least one internal protrusion that runs the entire length of the tube. Each protrusion is formed by an indentation of the wall of the tube, rather than being a fin or baffle protruding from the inner wall of the tube. The inner surface of the pipe is effectively continuous in the sense that it has not been modified by adding a fin or baffle in an axial direction along its internal wall. The cross-section of the wall itself is not symmetrical. The tube is formed of two sections, a first 'guide section' at the start of the tube, where the protrusion has a variable pitch, and an adjacent 'stabilisation section', where the protrusion has a constant pitch. The initial variable-pitch region has a gradual and continuous increase in pitch, ranging from 0-60 degrees.

EP1561795 describes cracking tubes with a spiral fin for use in thermal reactors for producing ethylene. The pipes of this disclosure have fins formed on an inner surface which are inclined at a fixed angle with respect to an axis of the tube. This disclosure has discrete regions of fins, with each region having different fixed angles, and spaced apart along the axial length of the tube. These fins are intended for steering the fluid inside the tube. The fins are discretely arranged on one or more helical loci. The tube's inner surface also has regions where no fins are present in the direction parallel to the axis of the tube.

The present invention overcomes the disadvantages of established tubes by increasing the heat efficiency of the tube by ensuring substantially homogeneous mixing of the fluid. In the prior art, such as EP1561795, protrusions are welded on to the internal wall in the form of discontinuous fins with a helical shape. The disclosure of EP1561795 focusses on having one or several discontinuous helical-shaped welded profiles on the interior wall and is used in small internal diameter tube furnaces known as millisecond furnaces.

A key weakness of inventions aiming to increase the heat transfer in furnaces with such small internal diameter is that there may be the problem of a pressure drop along the length of the tube. The disclosure of EP1561795 aims to address the problem of heat transfer but this appears to be achieved at the expense of creating a pressure drop. Indeed, it appears that the heat transfer has been increased to the detriment of the pressure drop, with the internal fins being the origin of the excessive pressure drop along the length of the pipe.

In this regard, US 5950718 also discloses a heat exchange tube for use in cracking furnaces. The disclosed tube has fins extending radially inward from the internal wall of the tube and aims to provide a balance between an improvement in heat transfer efficiency and suppression of pressure loss across the tube. The fin of the tube has a constant pitch that is specific to a particular region of the tube. For example, the tube may have a first region having a first constant pitch adjacent to a second region having a second constant pitch. The second constant pitch is different from the first constant pitch.

US 4314587 discloses an internally ribbed tube for use in boilers. The tube comprises multiple internal ribs designed to minimise overheating of the tube by controlling the flow of fluid within the tube. The document also discusses the drawbacks of existing ribbed tubes, in particular that the shape of a rib may be 'advantageous in regard to pressure drop considerations'. This link between rib shape and 'pressure drop considerations' results in embodiments of the disclosure being provided with ribbing on only one side of the inner wall of the tube. EP2248581A1 discloses a process for quenching the effluent gas of a furnace.

The present invention seeks to provide an improved steel pipe for use in cracking hydrocarbon feedstocks which overcome some or all of the disadvantages of the prior art. The pipes of the present invention are circular pipes. The walls are generally of uniform thickness. The cross-sectional profile of the walls is circular and fins are then added to the internal surface of the pipe, as discussed below.

One aim of the invention is to reduce or substantially eliminate the temperature gradient across the cross section of the pipe. The invention seeks to reduce the incidence of side products and also seeks to improve the overall efficiency of the process. The fins of the invention are designed to have a particular helical profile in an axial direction in order to secure this technical benefit.

### BRIEF SUMMARY OF THE DISCLOSURE

The present invention, in contrast to the prior art, is able to maximise the heat transfer whilst also minimising pressure drop across the length of the tube. More particularly, the circular pipes of the invention tailors the maximum heat transfer to the tolerated pressure drop. The pipes or tubes of the invention are made of steel.

The invention achieves its objective by moving the fluid located near the tube walls of the ethylene cracker, where it is relatively very warm, toward the tube centre, where it is relatively cooler, by spinning (controlled centrifugation) in order to increase the fluid temperature in the centre of the tube. This is achieved using a carefully designed internal profile of the pipe. This internal profile is easy to manufacture.

The internal profile is continuous and is designed to increase the heating efficiency of the tube, and therefore increase the cracking efficiency of the furnace. In particular, the pipes of the invention are designed so that the cracking reaction is able to go to completion just before the pipe exits the furnace i.e. just before the end of the high temperature region so as to maximise production/yield of the desired products, ethylene and propylene.

This design also serves to minimise the production of the un-desired products, e.g. carbon, aromatics and soot deposits. It is also an aim of the invention to ensure that the pressure drop along the length of the pipe is minimised. In other words, the invention seeks to achieve an efficient heat transfer whilst also ensuring that the pressure along the pipe is maintained at the same level as far as possible.

In summary, the invention achieves its various objectives by forcing the hot fluid near the tube wall toward the centre of the tube to increase the overall fluid temperature.

According to the present invention, there is provided a steel tube for use in cracking hydrocarbons at high temperature, wherein the steel tube has a fin formed on the inner wall of the tube, the fin extending continuously in a helical direction across at least a portion of the axial length, the fin comprises an initial region of constant helical pitch , an intermediary region of varying helical pitch, and a final region of constant helical pitch.

In some embodiments, the fin runs across the entire axial length of the tube.

The fin comprises an initial region of constant helical pitch. This initial region of constant helical pitch precedes the region of variable pitch. In one embodiment, there is only a single fin on the tube. In this case, the initial constant pitch fin is directly joined to the varying pitch fin so as to form a single continuous fin.

The initial constant pitch fin may be separate from the fin of variable pitch. Thus, in some embodiments, the fin may comprise an initial region of constant helical pitch followed by a region of varying helical pitch.

The fin comprises a final region of constant helical pitch. Thus, in some embodiments, the fin may comprise a region of varying helical pitch followed by a final region of constant helical pitch. The final constant pitch fin may be directly joined to the varying pitch fin so as to form a single continuous fin. In other embodiments it may be separated from the fin of variable pitch.

The fin comprises an initial region of constant helical pitch, followed by a region of varying helical pitch, followed by a final region of constant helical pitch, as the tube is traversed from a first end to a second end of the tube. Accordingly, the fin comprises a constant-variable-constant pitch arrangement.

In some embodiments, the initial region of constant helical pitch is between 1D and 40D in length (where D is the internal diameter of the tube), preferably between 1D and 20D in length, and more preferably between 2D and 6D in length.

In some embodiments, the final region of constant helical pitch is between 1D and 40D in length (where D is the internal diameter of the tube), preferably between 1D and 20D in length, and more preferably between 1D and 3D in length.

In some embodiments, the region of varying helical pitch has an axial length defined by the total length of the tube minus the lengths of the initial and final constant helical pitch regions.

In some embodiments, the sum of the axial lengths of the initial region of constant helical pitch, region of variable helical pitch and final region of constant helical pitch is equal to the total axial length of the tube.

In some embodiments, the region of variable helical pitch is a length that is at least 80% of the axial length of the tube. In some embodiments, the region of variable helical pitch is a length that is at least 50% of the axial length of the tube. In some embodiments, the region of variable helical pitch is a length that is at least 20% of the axial length of the tube.

In some embodiments, the region of variable helical pitch may be up to and including 0.5 times the length of the tube. The region of variable helical pitch is always present in the tubes of the invention.

Tubes according to the present invention may be considered to have a number of defining parameters. Firstly, there is the overall length of the tube which can be referred to as its axial length. Secondly, there is the cross-sectional shape of the tube. This represents the shape of the tube in profile when it is cut into two pieces. Thirdly, there is the helical length of the fin. The helical length refers to the length travelling along the fin itself as it rotates around the hypothetical central axis of the tube while making its way along the inner wall of the tube. Fourthly, it is also possible to define the height, width, and profile of the fin itself, which is provided on the inner wall of the tube.

In an embodiment, tubes according to the invention are linear. For example, the tube itself may not be helically shaped.

In an embodiment, the initial region of constant helical pitch is of lower i.e. shallower pitch than the final region of constant helical pitch. In an alternative embodiment, the initial region of constant helical pitch is of higher pitch than the final region of constant helical pitch.

In an embodiment, the variation of pitch over the helical length of the region of varying helical pitch from its beginning to its end increases. This increase in pitch along its helical length may be constant or the increase in pitch may itself increase in magnitude along the helical length of this intermediate region. It is preferred that the increase in pitch is constant along the helical length in the region of varying helical pitch.

In an embodiment, the variation of pitch over the helical length of the region of varying helical pitch from its beginning to its end decreases. This decrease in pitch along its helical length may be constant or the decrease in pitch may itself decrease in magnitude along the helical length of this intermediate region. It is preferred that the decrease in pitch is constant along the helical length in the intermediate region.

In some embodiments, the overall change in helical pitch from the start of the tube to the end of the tube is greater than 0.2D (where D is the internal diameter of the tube).

As mentioned previously, the fin may extend for the entire length of the tube or it may extend for just a portion of the axial length of the tube. Cracking tubes are typically manufactured in lengths of about 12 m and this appears to be an industry standard. The fin may extend for the entire 12 m of the tube or for only some part of that length. However, tubes can be manufactured in other lengths and the fin may extend over some or all of the axial length of such tubes. It should be appreciated that cracking tubes can be manufactured in any length as required by the conditions specific to each cracking furnace. Accordingly, the fin may extend across the entire axial length (e.g. about 6m, about 12m, about 13m) of the tube or for only some part of that axial length.

In some embodiments, when the tube has a length of about 12 m, the fin extends across a 6 m portion of the tube. Thus, in some embodiments, when the tube has a length of about 12 m, the fin extends across a 6 m portion of the tube that extends from a centre point along the axial length of the tube to one end of the tube.

In some embodiments, when the tube has a length of about 6 m, the fin extends across the full length of the tube. Thus, in some embodiments, when the tube has a length of about 6 m, the fin extends across the full axial length of the tube, i.e. from the first end of the tube to the second end of the tube.

Prior art tubes which are internally shaped or profiled generally have the shape or profile extending for the entire length of the tube and this can be costly to manufacture because of the complex techniques required to apply an internal shape or profile. In contrast, the tubes of the present invention can be provided with a fin along their entire axial length relatively economically.

The cross-sectional profile of the walls of the tubes of the invention are circular in shape. In principle, non-round cross section tubes could also be provided with an internal fin according to the invention. For example, off-round, elliptical, hexagonal, heptagonal, octagonal, etc. tubes might also have a fin according to the invention provided and some or all of the inner wall.

One advantage of the invention may be that the special shape of the fin means that it is not necessary for the entire axial length of the tube to be provided with the fin. This also results in a significant cost saving without impacting performance in any way. It is also possible to provide shorter length tubes which are provided with helical fins along their entire axial length. For example, it is possible to produce a 6 m or 8 m or 10 m tube, etc. which has a helical fin according to the invention along its entire axial length. Equally, such a tube may have a fin disposed along only a portion of its axial length.

In an embodiment, the fin extends only a portion of the axial length of the tube. In a preferred embodiment, the fin only extends along 80% of the axial length tube and more preferably only extends along 75% of the axial length. In further preferred embodiments, the fin only extends along 60% of the axial length and more preferably only along 50% of the axial length of the tube. However, the fin could extend as little as 40% of the axial length of the tube. In the case of a 12 m tube, we have found that the optimum length for the fin is about 6 m in terms of achieving the most efficient reaction conditions for the cracking reaction, meaning that the sweet-spot for the fin length is between 40% and 60%, inclusive, of the axial length of the tube. In other words, it appears as if a finned region of axial length of about 6m enables the best mixing of the hydrocarbon feedstock when passing through the tube.

It is contemplated that shorter or longer tubes than the normal standard of 12 m might be produced incorporating a variable helical pitch profile according to the invention over some or all of their axial length in order to achieve the same technical effect.

In another embodiment, the height of the fin is approximately constant along its length in an axial direction. In this context, height refers to the amount of protrusion of the fin from the surface of the inner wall of the tube. In another embodiment, the height of the fin may vary along its length. For example, the fin may have a certain constant or varying height over one portion of the helical length, and may have a different constant or varying height over another portion of the helical length the fin. These regions of differing height may or may not correspond with the regions of differing pitch of the fin. The height of the fin is comparable with the thickness of wall and may vary from 0.5 to 5 thicknesses, preferably from 1 to 2 thicknesses.

In another embodiment, the width of the fin is constant along its helical length. However, it is also possible that the width of the helical fin varies along its length in exactly the same manner as described for variations in the height of the helical fin along its length.

The most appropriate height and/or width of the fin will depend on the gas flow requirements for a particular end use application. These can be calculated as described below.

Tubes of the invention generally fall within the range of 6 m to 12 m in length. Tubes of the invention generally fall within the range of 20 mm to 70mm in internal diameter, preferably within the range of 35 or 40 mm to 60 mm, more preferably within the range of 40 or 50 mm to 55 mm. Tubes according to the invention may have an internal diameter of 38 mm, 50 mm, or 65 mm. Tubes according to the invention are typically of 50 mm in internal diameter. Tubes according to the invention typically have a maximum internal diameter of 65 mm for best performance.

Where the diameter of a tube is referred to in this specification, this should be understood to be the internal diameter of that tube. In other words, the thickness of the wall of the tube does not form part of this measurement. Tubes of the invention typically have a wall thickness of from 6-12 mm. In particular, tubes of the invention may have a wall thickness of from 6-8 mm.

The profile i.e. the cross-section of the helical fin is typically semi-circular. However, other cross-sectional shapes are also possible, such as a rectangular, curved (round or rounded) shape, and elliptical shape, or a triangular shape. Again, the most appropriate shape for the cross-section of the fin will depend on the gas flow requirements for a particular end use application.

In another embodiment, the tube is provided with more than one fin according to the invention. In such a case, each fin may independently extend in a helical manner along all of the axial length of the tube or along only a portion. In some embodiments, two more fins may be of the same axial length. In this case, they may either extend over the same axial length of the tube or they may be arranged so as to extend over overlapping axial regions of the tube. In other embodiments, it is also possible for two or more fins to be of different lengths. In this case they may be arranged so as to substantially overlap one another along the entire length of the shorter fin, or they may be arranged so as to simply overlap over part of the length of the shorter fin.

In a further embodiment, when considering in terms of flow of hydrocarbon material through the tube when in use, it is possible to define one end of the tube as the start of the tube and the other end of the tube as the end of the tube. In such a case, one embodiment of the invention contemplates the beginning of the fin part way along the axial length of the tube away from the start of the tube. In this embodiment, the fin may terminate at the end of the tube, or it may terminate away from the end of the tube. The fin may terminate at the end of the tube.

### BRIEF DESCRIPTION OF THE DRAWINGS

Examples are further described hereinafter with reference to the accompanying drawings, in which:
Figure 1 demonstrates fluid flow through three tube designs, as modelled by the CFD software described herein: a) a bare tube, with no internal fin, b) a tube with a discontinuous/intermittent fin of constant pitch, and c) a tube according to the present invention, having a continuous fin of varying pitch.
Figure 2 charts the core temperature of gas flowing through the tubes of RUN06, RUN07, and RUN08 as a gas passes along the axial length of the tube.
Figure 3 charts the core pressure of a gas flowing through tubes of RUN06, RUN07, and RUN08 as a gas passes along the axial length of the tube.
Figure 4 depicts an example of a Pareto plot that results from the modelling experiments detailed herein.
Figure 5 is a flow diagram representing the method used to determine the optimal design parameters of tubes according to the present invention.
Figure 6 demonstrates fluid flow through tubes according to RUN36 and RUN37.
Figure 7 charts the core pressure of a gas flowing through tubes of RUN36 and RUN37 as a gas passes along the axial length of the tube.
Figure 8 demonstrates fluid flow through tubes according to RUN01 and RUN02.
Figure 9 depicts the internal profile of an exemplary tube according to the present invention.

### DETAILED DESCRIPTION

The current invention is designed to achieve the maximum mixing of a fluid passing through a tube to facilitate an efficient chemical reaction. The tube comprises a continuous fin with a varied pitch helical shape, starting with a length or without a length of constant helical pitch at a defined initial pitch, and finishing with a length or without length of constant pitch at a defined final pitch.

In the context of the present invention, a 'continuous' fin is a fin that extends from a first point to a second point without interruption. It may be that the first point is the first end of the tube and the second point is the second end of the tube.

We have found that there are four parameters of the tube which may be defined in order to calculate the appropriate region of variable helical pitch of the tube in order to maximise the efficiency of the cracking reaction while minimising pressure drop across the length of the tube. These are:
- Fin pitch of the initial constant helical pitch region
- Length of the initial constant helical pitch region
- Fin pitch of the final constant helical pitch region
- Length of the final constant helical pitch region

These parameters were used by us to model the pressure and temperature of the fluid flowing through the tube. This was done using computational fluid dynamics (CFD) software as described below.

Accordingly, it will be appreciated that for tubes having a region of varying helical fin pitch, wherein the length of the varying helical pitch region is a result of the lengths of the initial and final constant helical pitch regions.

The four parameters described above are determined such that the furnace outlet temperature is maximised and such that the pressure drop across the tube is minimised. Each of these parameters are defined for a tube having a specific tube length and with a specific internal diameter. The software enables optimum values to be determined from our realisation of the four key parameters.

For example. A tube having a 50mm internal diameter (ID) and a tube length of 6m, the following four parameters may maximise the outlet temperature while minimising pressure drop:

| | | |
|---|---|---|
| • | Fin pitch of the initial constant pitch region: | 100mm |
| • | Length of the initial constant pitch region: | 1516mm |
| • | Fin pitch of the final constant pitch region: | 128.57mm |
| • | Length of the final constant pitch region: | 763mm |

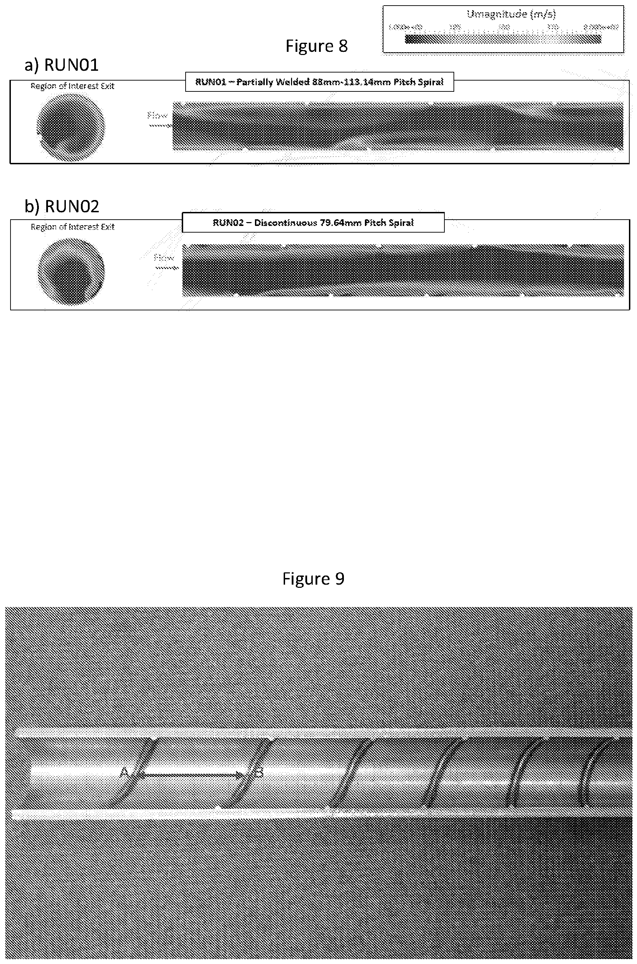

'Pitch' as described herein refers to the axial length along the tube required for one complete revolution of the helical fin. In other words, the pitch is the distance between equivalent points on two adjacent helical rotations of the fin, for example, between points A and B on Figure 9. The reference to increasing pitch, or reducing pitch, means that the amount of curvature, i.e. gradient of the fin increases or reduces respectively. A constant pitch fin has the same amount of curvature at any point on its length. Similarly, a varying pitch fin has a varying amount of curvature at different points along its axial direction. The fins are generally helical.

Tubes according to the present invention therefore aim to maximise the efficiency of heat transfer at a key location within the furnace and minimise as much as possible the pressure drop. Accordingly, the tubes of the present invention may apply to the full length of the entire furnace tube, but preferably to only a portion of the entire furnace tube length.

### EXAMPLES

### Example 1

Table 1 shows comparative data for simulations conducted for a series of tubes having an internal fin. The experiment calculated the outlet temperature and pressure drop across the tube for a hydrocarbon cracking reactor. The simulation study comprised four tubes, each with a 50 mm internal diameter and a total axial length of 6 m.

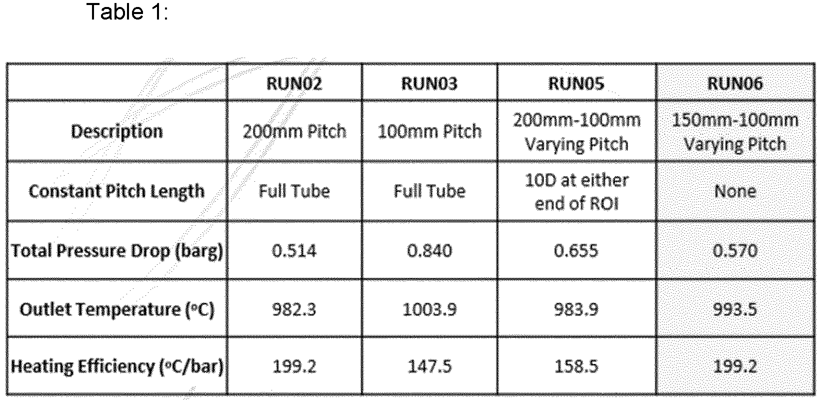

RUN02 relates to a tube with a continuous internal fin having a constant 200mm pitch across the entire length of the tube, i.e. not a tube according to the present invention. This configuration results in a low pressure drop (0.514bar), but also a low outlet temperature at the furnace exit (982.3°C).

RUN03 corresponds to a similar tube having a continuous internal fin with a constant pitch of 100mm across the entire length of the tube, i.e. not a tube according to the present invention. This configuration results in a high outlet temperature at the furnace exit (1003.9°C), but also a high pressure drop (0.840bar).

RUN05 relates to a tube having an initial region of 200mm constant pitch and final region of 100mm constant pitch, each region corresponding to a length of 10 tube diameters. The tube of RUN05 also has a region of varying pitch positioned between the initial and final constant pitch regions. The pitch in the varying pitch region varies from 200mm at the start of the varying pitch region to 100mm at the end of the varying pitch region.

RUN06 corresponds to a tube having no constant pitch region, i.e. a tube in which the initial and final constant pitch regions each have a length of 0D. Therefore, the tube comprises a region of varying pitch extending along the full length of the tube. The pitch varies from 150mm at the start of the tube to 100mm at the end of the tube.

RUN05 shows a noticeable increase in pressure drop (0.655bar) and almost no temperature increase relative to RUN02. RUN06 shows a noticeable temperature increase at tube exit (993.5°C), corresponding to a 10°C increase relative to a tube having a continuous pitch of 200mm (RUN02), with only a small increase in pressure drop (0.570 bar).

The simulations also studied the heating efficiency of each RUN. Table 1 shows that tubes having only a constant pitch region with a 200mm pitch (RUN02) and tubes having only a variable pitch region with the pitch varying from 150mm to 100mm (RUN06) exhibit the best heating efficiency.

### Example 2

A comparative study of the velocity of the fluid inside a 6m tube length with a 50mm internal diameter was performed via the simulation methods described herein. The study compared a tube with no internal fin (RUN07), i.e. a 'reference tube', a tube with a discontinuous/intermittent fin of constant pitch such as those disclosed in EP1561795 (RUN08), and a tube comprising a region of varying helical pitch, wherein the pitch varies from 150mm to 100mm across the length of the tube (RUN06).

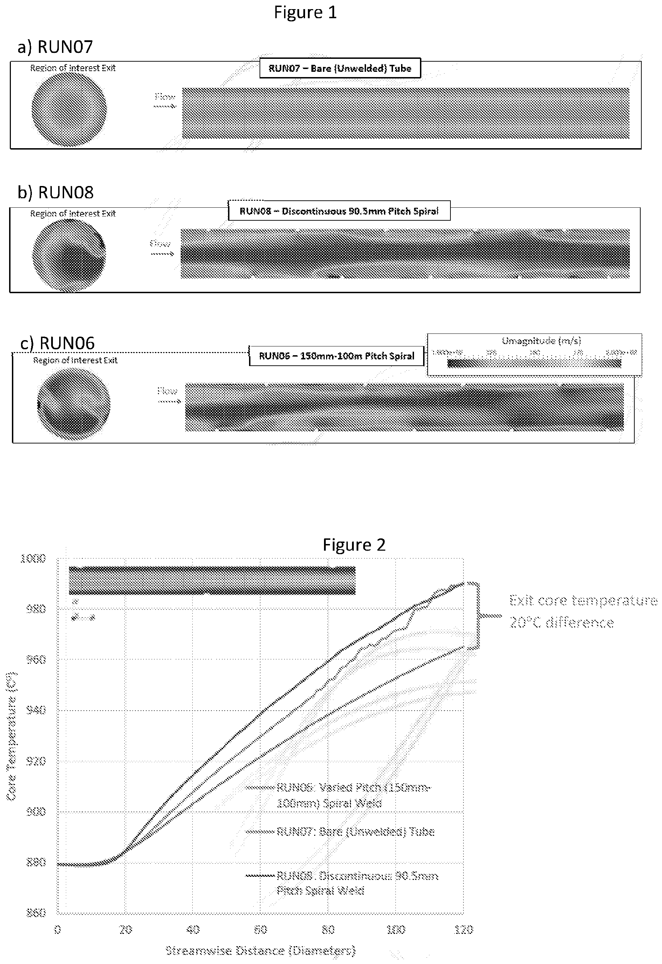

The study showed that a laminar fluid motion in the reference tube (RUN07), with the fluid in the centre moving faster than near the tube wall, as can be seen in Figure 1a. This is typical and expected behaviour of fluid in a tube without an internal fin. Accordingly, the fluid in the centre of the tube is much cooler than near the tube wall. The tube comprising a discontinuous fin (RUN08) involves a fluid velocity much higher in the centre of the tube than the reference (RUN07), as can be seen in Figure 1b. Figure 1b also demonstrates that fluid flowing through the tube in RUN08 is bouncing on the discontinuous helical fin, with the warm fluid near the tube wall being redirected in several directions and creating turbulence towards the centre of the tube.

Figure 1c demonstrates that a tube according to RUN06, where a continuous fin having a varying pitch, produces a fluid velocity in the centre of the tube that is much higher than the reference tube (RUN07). However, in contrast to the tube comprising a discontinuous fin (RUN08), the higher fluid velocity is not only concentrated in the tube centre, but across the full internal area of the tube (tube wall to centre) by the time that the fluid has reached the second half of the tube.

Figure 1c demonstrates that fluid passing through the second half of the tube section, is submitted to a centrifugal force with spinning turbulence orientated more in the axial direction of the tube. This creates less pressure drop relative to the tube of RUN08, where the fluid bouncing creates turbulence resulting in a pressure drop across the tube. The results of this comparative study are summarised in Table 2.

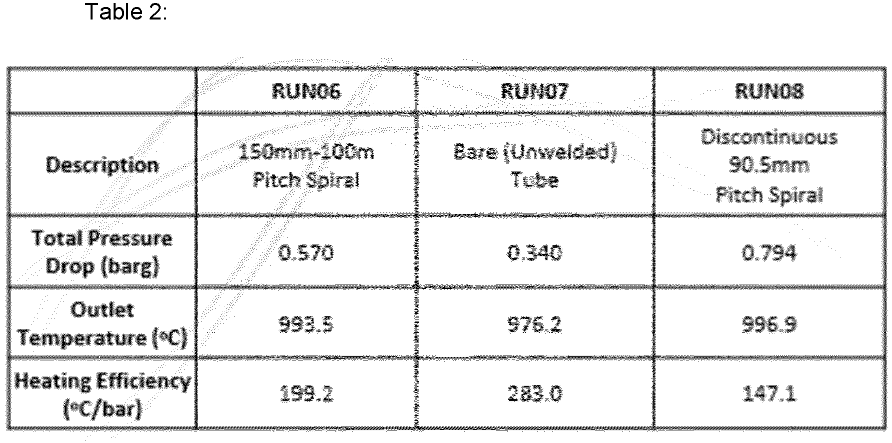

The average streamwise velocity and average in plane velocity of each tube was determined, as shown in Table 3. The average streamwise velocity is almost the same for each of the three tube designs. However, the average in-plane velocity of the tube of RUN07, which has no internal fin, is almost non-existent (0.13m/s). Conversely, the tube of RUN08, which has a constant but discontinuous pitch, is significantly higher (33.85 m/s), however tubes according to the present invention, i.e. RUN06, demonstrate a drastically increased in-plane velocity (52.83m/s). This is 18.43m/s higher than the discontinuous design of RUN08. Therefore, tubes according to the present invention demonstrate an increase in the spinning/stirring/mixing of the gas within the tube. This allows a better distribution of the temperature across the entire contents of the tube and therefore a more efficient cracking reaction can occur.

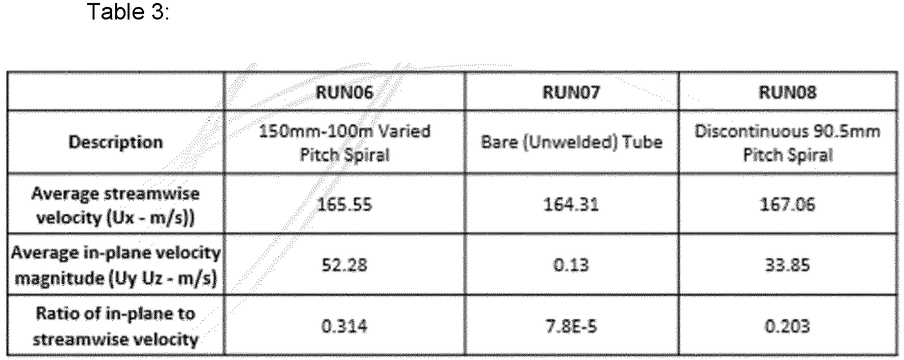

Figure 2 plots the distribution temperature along each of the tubes of RUN06, RUN07, and RUN08 at their core. Figure 2 clearly shows that the core exit temperature of the tube of RUN07 (no fin) is over 20°C lower than the core exit temperature of the tubes of RUN06 and RUN08. The temperature distribution pattern of the tube of RUN06 (i.e. a tube of the invention) falls between the temperature in the tubes of RUN07 and RUN08, until the last 500 mm of the tube, where the central temperature of RUN06 is slightly above that of RUN08. In this regard, one aim of the invention is to bring the fluid to its highest temperature just before exiting the tube to maximise cracking but to minimise secondary reactions due to long exposure at a cracking temperature, where formation of aromatics and soot decrease the yield of the desired cracked products, such as ethylene.

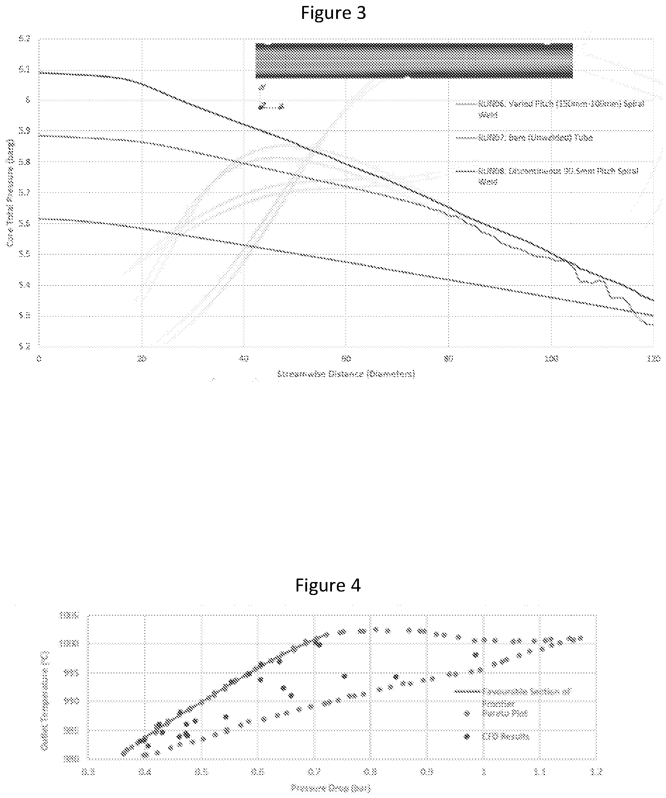

Similarly, Figure 3 shows that the starting pressure in the tube of RUN08 has to be much higher than for tubes of RUN06 in order to reach a similar exit pressure. Whilst the pressure drop is linear after 1000mm up to the exit for the tubes of RUN07 and RUN08, this is not the case for the RUN06, where the pressure drops mostly in the last 1000mm of the tube, where it is expected that the velocity will be much higher because of increased spinning/mixing of the gas, and where the temperature increase is the highest.

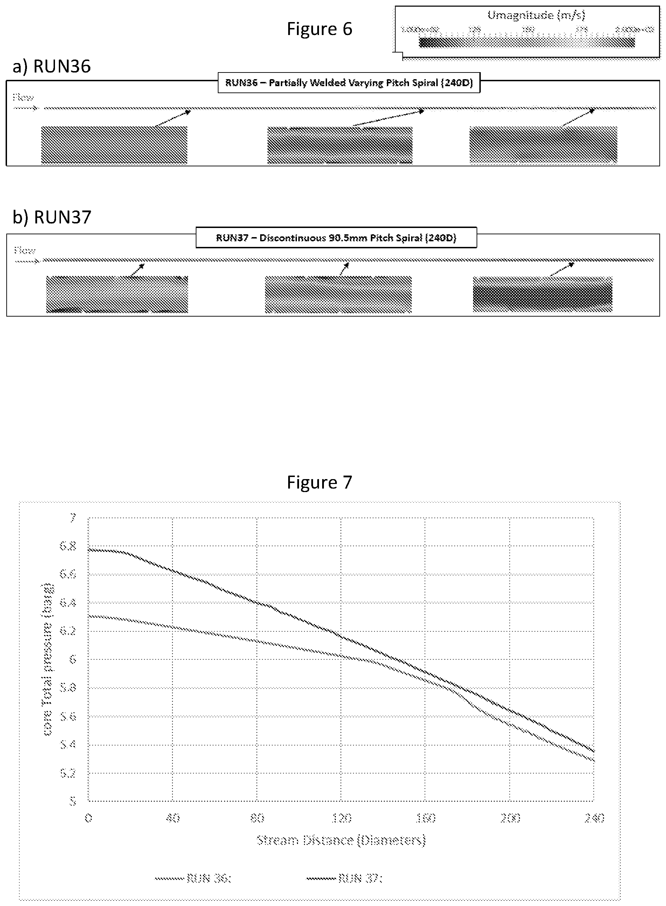

Another way to understand the temperature distribution of the gas across and along the tube length is to evaluate the volume of total gas reaching a given temperature or to evaluate the length of tube needed for the gas to reach a given temperature (Figure 7). For the chosen temperatures of 927°C, 955°C, 975°C, it was determined the portion of gas above these temperatures and the length of tube in which the gas needs to travel to reach these temperatures. If the average exit temperature of the concurrent and the invention are nearly identical, the length of tube needed to provide a gas above 975°C which is nearly the same as the exit temperature of the reference, is longer for the invention (104.5 x internal diameter = 5225mm) than the competitor (98.3 x internal diameter = 4915mm), which means that the extra nearly 20°C increase in temperature before the tube exit is reached in a shorter distance and therefore with less secondary reactions. It can be observed that the volume of fluid reaching the given temperature are below the competitor with 2%, 5% and finally 6%, but these results have to be considered with the pressure drop results. As, if the volume is higher and as, if the exit temperature of the invention is slightly lower than the competitor, in other hand, the pressure drop is much smaller (Figure 7), so this means that the current invention is impressively efficient to heat the fluid (199.2°C/bar) than the concurrent (147.1 °C/bar), with 52.1 °C/bar more heating efficiency.

### Invention Design Optimisation

The axial length of the initial and final regions of constant helical pitch determines the length of the region of varying helical pitch. The length of the region of varying helical pitch is the length of the tube that is remaining once the initial and final regions of constant helical pitch have been determined.

Therefore, it will be appreciated that in some examples where the initial and final regions of constant helical pitch are absent, the total axial length of the fin is the same as the axial length of the tube.

### Example 3

A number of simulations were performed by the methods described herein, to determine the influence of each of the tube parameters on the pressure drop and gas outlet temperature. The results of these simulations are given in Table 4.

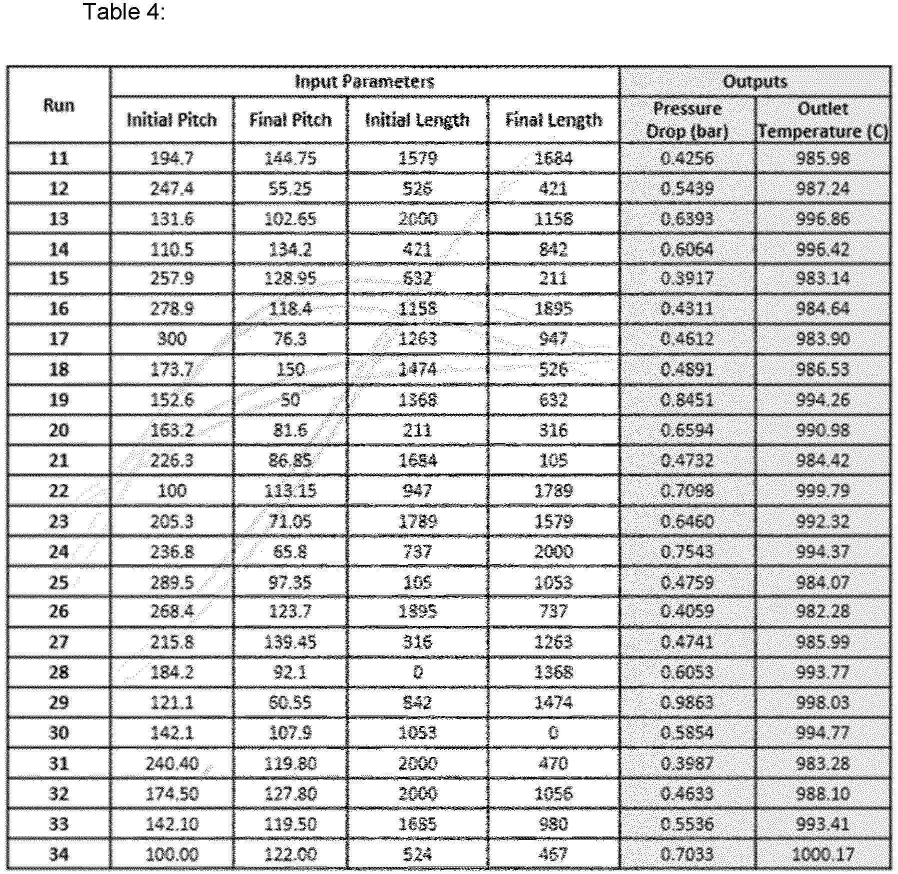

As evident from Table 4, the highest gas outlet temperature can be achieved with an initial pitch in the region of constant helical pitch that is smaller than the pitch in the final region of constant helical pitch (see RUN14, RUN22 and RUN34).

Accordingly, the axial length of the final region of constant helical pitch has a greater impact on the pressure drop across the tube than the initial region of constant helical pitch. We have found that the longer the axial length of the region of constant helical pitch, the larger the pressure drop across the tube. However, the increase of the axial length of the initial region of constant helical pitch on its own does not have a notable influence on the pressure drop. The initial region of constant helical pitch only appears to influence pressure drop when combined with an increasing axial length of the region of final constant helical pitch.
This means that relatively short initial and final regions of constant helical pitch are most effective. We also found that the influence of the axial length of the initial and final constant pitches are similar on the gas exit/outlet temperature as on the pressure drop.

### Methodology for modelling fluid flow

To simulate the fluid flow inside tubes of the invention, computational fluid dynamics (CFD) software was used to solve a series of equations that describe how the fluid behaves within a given geometry and set of flow conditions.

The CFD solver used to determine the performance characteristics of each tube design is based on OpenFOAM (an open source CFD solver). However, there are several commercial CFD solvers available that would be capable of simulating the gas flow through the tube design and outputting pressure drop and gas exit temperature. For example, the CFD solver used to determine the characteristics of the tube may be ANSYS Fluent, ANSYS CFX, or Star CCM+.

The following assumptions are made when setting up the CFD model:
- The flow is compressible, unsteady, turbulent and single phase
- There are no significant geometric features directly upstream or downstream of the region of interest
- The tube wall is held at a fixed temperature
- The incoming flow enters at a fixed temperature
- The mass flow rate entering the tube is fixed
- The chemical reactions within the tube are not modelled.

The code used to determine the performance envelope for the design can be replicated using one of the following commercial optimisation codes:
- Mode Frontier (https://www.esteco.com/modefrontier)
- Noesis (https://www.noesissolutions.com/our-products/optimus/engineering-optimization)
- The type of optimisation used is an 'expensive objective function' and using metamodelling methods (https://en.wikipedia.org/wiki/Metamodeling).
- The results are assessed with a response surface approach, in particular this uses a type of analysis known as kriging (https://en.wikipedia.org/wiki/Kriging).

We have undertaken a kriging process that takes a set of points that populate a design space, each of which consist of geometric parameters and desired outputs and fits a response surface to the input data. This response surface then gives a method for predicting how the outputs will respond to any change of the design within the limits of the input parameters. In the case of tubes of the present invention, each point in the design space consists of the following:

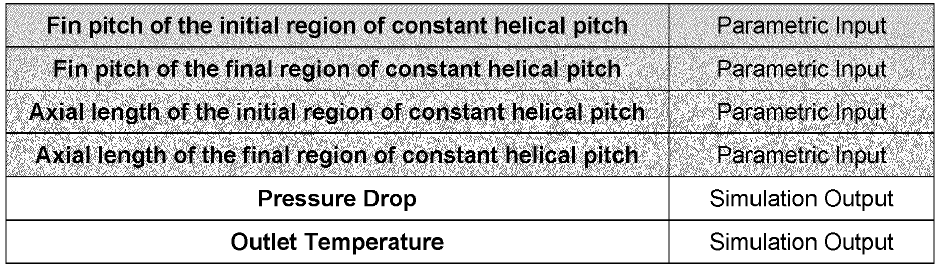

Therefore, each output design point provides a predicted performance and the combination of the four design parameters that achieve it.

The optimisation code produces a Pareto plot that defines the predicted limits of the design space, based on the input parameters. Figure 4 shows an example of a Pareto plot. The red points are CFD simulation results that have been used in the optimisation code to predict the performance envelope (bounded by the blue points). In this example the green line shows the favourable frontier of the Pareto. Further details on the Pareto plot can be found on the following webpage: https://en.wikipedia.org/wiki/Multi-objective optimization.

### Optimisation Procedure

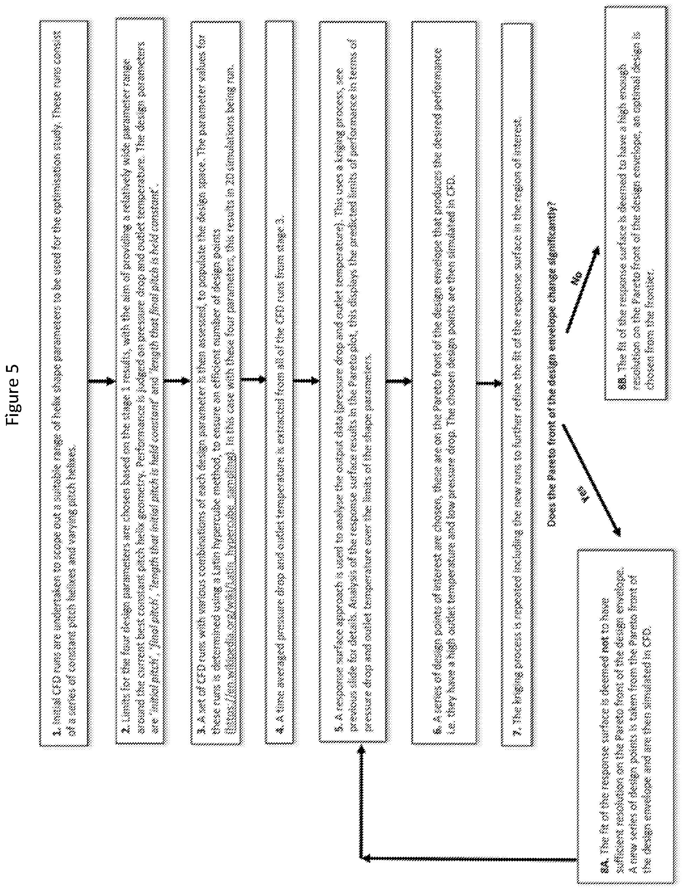

The method used to determine the optimal parameters of the tube is depicted in the flow diagram of Figure 5.

In a first step, initial CFD runs are undertaken to scope out a suitable range of helix shape parameters to be used for the optimisation study. These runs consist of a series of tubes comprising a fin of constant pitch or varying pitch.

In a second step, limits for the four design parameters are chosen based on the stage 1 results, with the aim of providing a relatively wide parameter range around the current best constant pitch fin geometry. Performance is judged on pressure drop and outlet temperature. The design parameters are '*initial pitch*', '*final pitch*', '*length that initial pitch is held constant*' and '*length that final pitch is held constant*, as described herein.

In a third step, a set of CFD runs with various combinations of each design parameter is then assessed, to populate the design space. The parameter values for these runs is determined using a Latin hypercube method, to ensure an efficient number of design points (https://en.wikipedia.org/wiki/Latin_hypercube sampling). In this case with these four parameters, this results in 20 simulations being run.

Subsequently, in a fourth step, a time averaged pressure drop and outlet temperature is extracted from all of the CFD runs from step 3.

In a fifth step, a response surface approach is used to analyse the output data (pressure drop and outlet temperature). This uses a kriging process, as discussed elsewhere herein. Analysis of the response surface results in a Pareto plot, which displays the predicted limits of performance in terms of pressure drop and outlet temperature over the limits of the shape parameters.

In a sixth step, a series of design points of interest are chosen, these are on the Pareto front of the design envelope that produces the desired performance i.e. they have a high outlet temperature and low pressure drop. The chosen design points are then simulated in CFD.

In a seventh step, the kriging process is repeated including the new runs to further refine the fit of the response surface in the region of interest.

If the Pareto front of the design envelope changes significantly after the seventh step, then the fit of the response surface is deemed not to have sufficient resolution on the Pareto front of the design envelope. A new series of design points is taken from the Pareto front of the design envelope and are then simulated in CFD.

If the Pareto front of the design envelope does not change significantly, then the fit of the response surface is deemed to have a high enough resolution on the Pareto front of the design envelope, and an optimal design is chosen from the frontier.

### FURTHER EXAMPLES

### Example 4

### 12m LENGTH TUBE - 50mm inside Diameter:

Tubes according to the present invention may be 6m in length. However, conventional cracking furnaces comprise a cracking tube that is 12m in length. We have therefore investigated the present invention wherein the tube has an axial length of 12 m.

A comparative study between a 12m tube of the present invention (RUN36) and a 12m tube comprising a discontinuous fin of constant helical pitch (RUN37). The tube of RUN36 comprises a fin having a region of varying pitch, wherein the fin having a region of varying pitch extends across the final 6m portion of the tube. In other words, the tube of RUN36 has an initial 6m axial length in which there is no fin.

Figure 6 depicts the gas stream velocity profiles of the tubes of RUN36 (Figure 6a) and RUN37 (Figure 6b). It is clear from Figure 6 that the gas velocity in the 12m tube of the invention is better distributed across and along the entire tube length when compared to the tube of RUN37. Accordingly, the tube of RUN36 will have an improved heating efficiency and less pressure drop compared to RUN37.

The summary of the gas stream velocity shown in Table 5 demonstrates that the average in-plane velocity of a 12m tube of the invention and that of a 12m tube comprising a discontinuous fin of constant pitch are very similar to the average in-plane velocity of the 6m tubes detailed in Table 3. Therefore, we have found that despite an initial finless 6m region in a 12m tube of the invention (compared to a 12m discontinuous fin in RUN37), a 12m tube of the invention still creates a higher in-plane velocity of the gas stream. Accordingly, a 12m tube of the invention having a 6m fin provides enhanced spinning/stirring/mixing of the gas within the tube.

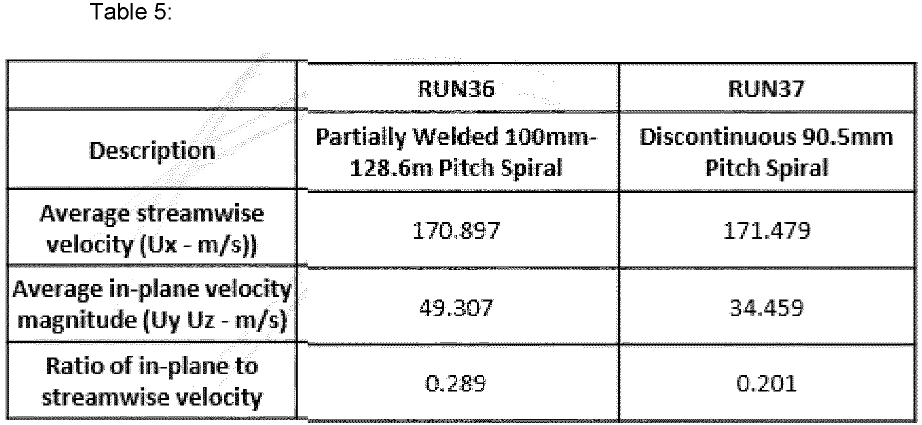

Figure 6a shows that the core gas temperature in the tube of RUN 36 does not increase too early in the tube, but instead only begins to increase after around 8.46m (169.2 × ID, where ID = 50mm). This prevents the gas from heating up and cracking too early, which in turn avoids the formation of unwanted secondary reactions.

We have found that the temperature distribution of the core gas between 8.0m (160 × ID) and the tube exit at 12m (240 × ID), is the most critical region of the tube for efficient cracking. It can be seen in Figure 6a that the gas temperature increase is drastic in this region of tubes of the invention. In fact, in this short length of the tube of RUN36, the temperature increases to match the temperature of the tube of RUN37.

More specifically, the core gas temperature in the tube of RUN36 is at 988.5°C at a point 8m along the tube, while the temperature of the tube of RUN37 is already 1007.35°C by this point (i.e. 18.85°C higher). Accordingly, the tube of RUN 37 is more likely to produce side products than the tube of RUN36. In addition, the core gas temperature in tubes of the invention is 1026.15°C when it exits the tube, compared to a temperature of 1029.45°C in the tubes of RUN37 (i.e. only 3.3°C more than the invention). It follows that the targeted and more efficient mixing resulting from the tubes of the present invention give rise to a more efficient cracking reaction.

Furthermore, as can be seen from Figure 7, the increased temperature of the gas at the outlet of the tube of RUN37 comes at a cost of increased pressure drop. Accordingly, the tube of RUN37 requires a higher starting gas core pressure (0.4 bar higher) than tubes according to the present invention.

Table 6 summarises the average gas pressure drop and the average exit/outlet gas temperature (note that this is the average gas temperature and pressure, not the core), shows that tubes having a fin present on the final 6m portion of a 12m tube is still more efficient tubes having a discontinuous fin of constant pitch across the full 12m length of a tube.

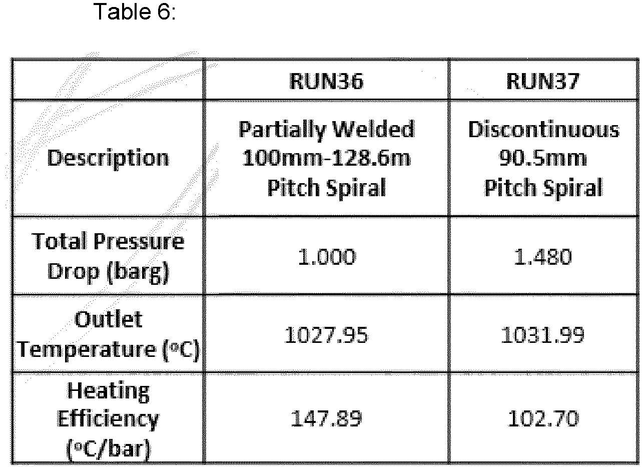

We have found that the heating efficiency of tubes of RUN36 is around 45°C/bar (44%) higher than the tubes of RUN37. Therefore, even if tubes according to RUN37 demonstrate a slightly higher (around 4°C) average exit gas temperature, the pressure drop is drastically lower (0.480 bar). This means that the pressure drop in tubes of the invention is nearly 50% less than the tubes of RUN37, which have a discontinuous fin of fixed pitch. Considering that a plain tube, without any internal fin, has a pressure drop of 0.764 bar, tubes according to the present invention exhibit a pressure drop increase of only 0.236 bar relative to a bare tube (a 31% increase). Conversely, tubes according to RUN37 exhibit a 94% increase pressure drop across the tube.

### Example 5

### 13.26m LENGTH - 44mm inside Diameter:

The experiments of Example 4 were repeated for a tube having an axial length of 13.26m and an internal diameter of 44mm. A tube with these dimensions closely resembles those used in millisecond ethylene steam cracker furnaces.

Figure 8 shows the gas velocity distribution for a tube RUN01 (Figure 8a) and a 13.26m tube comprising a discontinuous fin of constant helical pitch (RUN02 - Figure 8b). The tube of RUN01 comprises a fin having a region of varying pitch, wherein the fin having a region of varying pitch extends across the final 6m portion of the tube. In other words, the tube of RUN36 has an initial 7.26m axial length in which there is no fin.

Figure 8 shows that the tube exhibits a fast and homogeneously distributed gas flow, even very close of the tube wall. This is not the case for the tube of RUN02, where a thick layer near a large portion of the tube wall has a slower velocity. From this study and findings, it can expected that the pressure drop across tubes of RUN01 should be significantly lower than the tubes of RUN02.

Table 7 shows that the average in plane velocity of tubes according to RUN01 is 57.88m/s compared to only 33.57m/s for tubes according to RUN02 (i.e. a 24.31m/s (72%) increase in velocity. Therefore, a 13.26m tube according to RUN01 provides enhanced spinning/stirring/mixing of the gas within the tube. The result is a tube that gives rise to fewer side products and a more efficient cracking reaction.

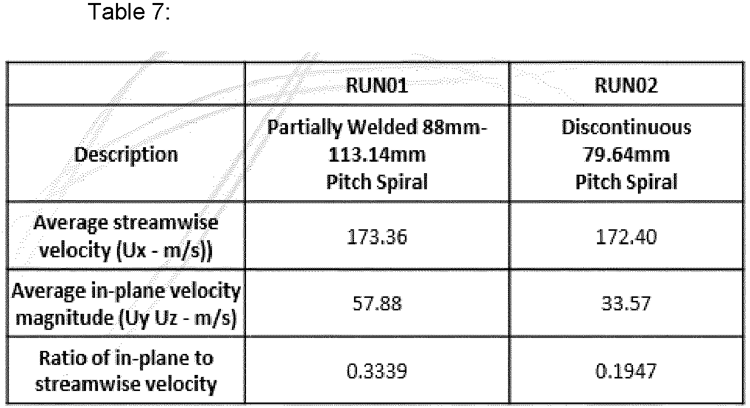

The Core Temperature distribution along the 13.26m is similar to the 12m tubes described in Example 4, and show the same drastic core temperature increase, in this case in the region from 7.7m (175xID of 44mm), and more from 8.8m (210xlD), with the difference between the exit core temperature of the RUN01 and RUN02 being smaller than for the 12m tubes described in Example 4 (only 1.3°C, compared to 3.3°C for the 12m tubes).

Whilst the core gas exit temperature is nearly the same for RUN01 and RUN02, tubes of RUN02 need a starting gas core pressure that is even higher than the increased starting pressure required for the 12m / 50mm ID tubes of Example 4 (0.4 bar in Example 4, 0.662 bar in the present example). This represents a requirement of a 66% increase in starting pressure to achieve a similar core gas exit temperature.

Table 8 shows that the average gas pressure drop and the average exit/outlet gas temperature (note that average gas temperature and pressure, not the core) of the 13.26m tubes of RUN01 are even more efficient. Tubes of RUN01 are 34.88°C/bar more efficient that the tubes of RUN02. This is an efficiency increase of 46.4%.

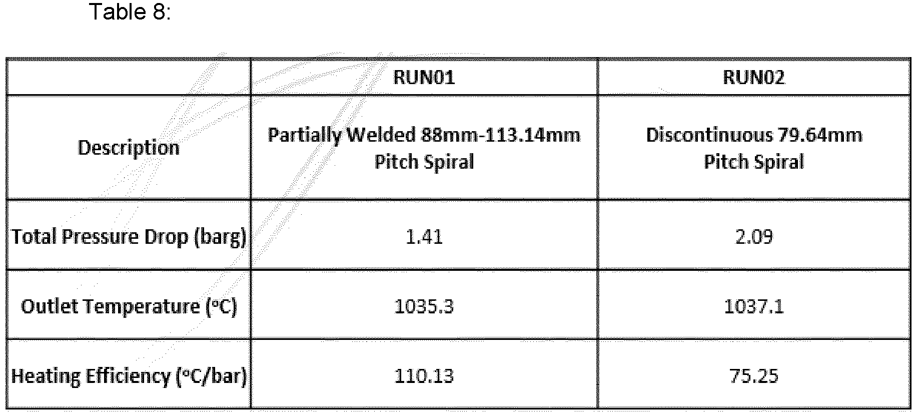

### Example 6

### 13.26m LENGTH - 44mm Inside Diameter- fin region extending across the full axial length of the tube

The above experiments were repeated to provide a comparison between a 13.26m tube having a discontinuous fin of fixed pitch (RUN02) and a tube where the fin also extends across the full axial length of the tube (RUN03).

We found that the velocity distribution for tubes according to RUN03 were slightly more turbulent near the tube exit when the fin is applied across the full length, compared to when the fin only extends across the final 6m axial region of the tube (RUN01), and still more homogeneous temperature distribution near the ID wall in comparison to the tubes of RUN02, which have a discontinuous fin of fixed helical pitch.

Table 9 shows that the average in the plane velocity of the tubes of RUN03 is 4.08m/s lower (53.80m/s) than the tubes having an equivalent fin across only the final 6m region of the tube (57.88m/s). However, this in-plane velocity is still 20.23m/s higher than the discontinuously finned tubes of RUN02 (33.57m/s). This represents a 60.3% increase in velocity for the tubes of RUN03 over RUN02. Accordingly, tubes according to RUN03 provide much higher mixing for a more efficient cracking reaction.

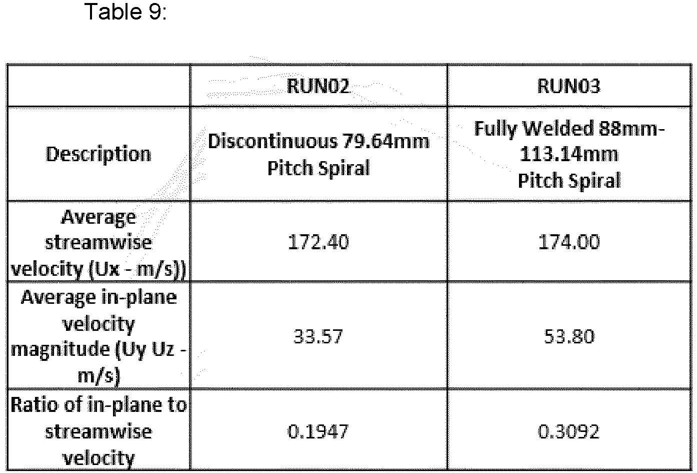

This ability of tubes to exhibit a high velocity of the gas in the plane of the tube can explain why, when the fin extends across the full length of the tube, the core gas temperature is significantly higher (10°C) than the tubes of RUN02. This 10°C difference is maintained for 1.72m, to decrease at 7.1°C average up to 7.83m length (178 ×ID) so during 5.71m, to decrease in average to 4.5°C average from 7.83m length to exit 13.26m (301 × ID), so during 5.43m. In other words, when the tube of the invention comprises a continuous fin extending across the full length of the tube, the gas temperature is increased along the full length of the tube, relative to the tubes having a discontinuous fin of fixed helical pitch across the full length of the tube. This performance can be of great advantage when the gas to crack is a heavy feedstock, which are more difficult to crack. Such heavy feedstocks undergo a slower kinetic cracking reaction and so need more time and an increased temperature to reach a better cracking yield.

### Tube

Tubes according to the present invention may be prepared by centrifugal casting or by extrusion.

In preferred embodiments, the steel tube is an extruded steel tube.

In embodiments, the fin formed on the inner wall of the tube is a steel fin. The fin may be welded directly to the inner wall of the tube. The fin may be a shaped spring wire that is spot welded to the inner wall of the tube

### Example 7

An exemplary tube having a variable pitch fin and an internal diameter of 50mm, is depicted in Figure 9. The exemplary tube was prepared by centrifugal casting. The fin on the inner wall of the tube was welded using Automatic Tungsten Inert Gas (TIG) welding. This technique uses a filler wire to produce the internal fin profile. The welding parameters were such that the weld profile was semi-circular and has an average height of 2mm and an average width of 3.5mm.

Tubes according to the present invention may be prepared from an alloy comprising:
from 0.15 to 0.35 wt% carbon,
from 2.5 to 5.0 wt% aluminium,
from 40 to 45 wt% nickel,
from 25 to 35 wt% chromium,
from 0.50 to 1.50 wt% niobium and / or vanadium,
from 0.01 wt% to 0.25 wt% yttrium,
from 0.01 wt% to 0.25 wt% tungsten and / or tantalum,
from 0.01 wt% to 0.25 wt% in total of one or more of titanium and / or zirconium and / or hafnium,
up to 0.9 wt% manganese,
up to 0.9 wt% silicon, and
up to 0.10 wt% nitrogen,
with the balance of the composition being iron and incidental impurities, and optionally wherein between 1 wt% and 75 wt% by weight of the nickel is replaced with cobalt.

Tubes according to the present invention may be prepared from an alloy comprising:
from 0.15 to 0.35 wt% carbon,
from 2.5 to 5.0 wt% aluminium,
from 40 to 45 wt% nickel,
from 25 to 35 wt% chromium,
from 0.50 to 1.50 wt% niobium and / or vanadium,
from 0.01 wt% to 0.05 wt% yttrium,
from 0.05 wt% to 0.25 wt% tungsten and / or tantalum,
from 0.04 wt% to 0.15 wt% in total of one or more of titanium and / or zirconium and / or hafnium,
an amount of up to 0.9 wt% manganese,
an amount of up to 0.6 wt% silicon, and
an amount of up to 0.10 wt% nitrogen,
with the balance of the composition being iron and incidental impurities, and optionally wherein between 5 wt% and 15 wt% by weight of the nickel is replaced with cobalt.

Tubes of the invention may be prepared from the above alloys, wherein carbon is present in an amount of from 0.20 wt% to 0.35 wt%.

Tubes of the invention may be prepared from the above alloys, wherein aluminium is present in an amount of from 3.5 wt% to 4.5 wt%.

Tubes of the invention may be prepared from the above alloys, wherein nickel is present in an amount of from 42 wt% to 45 wt%.

Tubes of the invention may be prepared from the above alloys, wherein chromium is present in an amount of from 28 wt% to 30 wt%.

Tubes of the invention may be prepared from the above alloys, wherein niobium is present in an amount of from 0.80 wt% to 1.50 wt%.

Tubes of the invention may be prepared from the above alloys, wherein silicon is present in an amount of from 0.3 wt% to 0.6 wt%.

Tubes of the invention may be prepared from the above alloys, wherein manganese is present in an amount of from 0.4 wt% to 0.8 wt%.

Tubes of the invention may be prepared from the above alloys, wherein tungsten is present in an amount of from 0.05 wt% to 0.15 wt%.

Tubes of the invention may be prepared from the above alloys, wherein titanium is present in an amount of from 0.08 wt% to 0.15 wt%.

Tubes of the invention may be prepared from the above alloys, wherein yttrium is present in an amount of from 0.01 wt% to 0.03 wt%.

Tubes of the invention may be prepared from the above alloys, wherein nitrogen is present in an amount of from 0.03 wt% to 0.06 wt%

Tubes according to the present invention may be prepared from an alloy according to Table 10:

**Table 10**

| | **C** | **Ni** | **Cr** | **Nb** | **Si** | **Mn** | **W** | **Ti** | **Y** | **Al** |
|---|---|---|---|---|---|---|---|---|---|---|
| **wt%** | 0.25 | 43.3 | 29.6 | 0.81 | 0.56 | 0.54 | 0.05 | 0.11 | 0.01 | 3.86 |

### Comparative Example 1

A number of simulations were performed by the methods described herein, to determine the influence of each of the tube parameters on the pressure drop and gas outlet temperature on tubes having a length of 6m and a diameter of 75 mm. Tubes having a diameter of 75mm provide a useful comparison of the beneficial properties of disclosed tubes. The results of these simulations are given in Table 11.

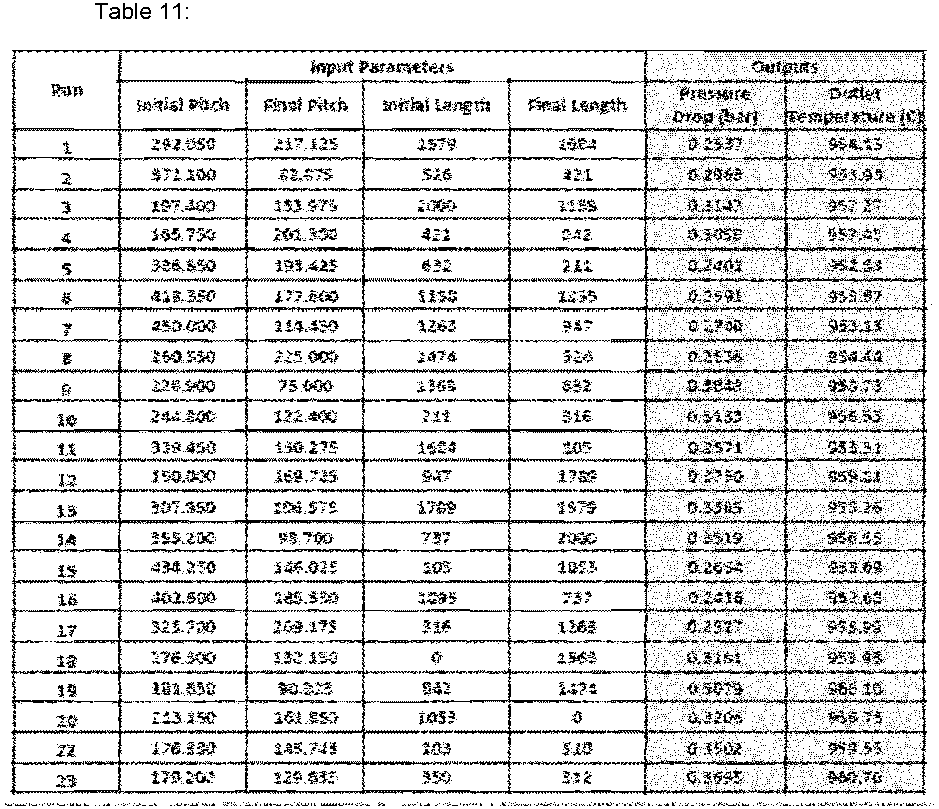

It can be seen from the above results that larger diameter pipes, such as those over 70 mm, do not obey the same rules as the pipes of the invention. The experimental results appear to show that that pipes having diameters larger than 70mm, i.e. those falling outside the scope of the present invention, are less affected by the profile of the internal fin. In other words, the gas flow appears to be less affected by the fin in these pipes.

As evident from Table 11, tubes having a diameter of 75 mm do not provide the same beneficial temperature and pressure drop properties. In addition, the relative effects of the initial and final helical portions on the overall properties, i.e. temperature and pressure of the fluid stream within the pipe, appear to be different from the pipes of the invention. This is evident from at least RUN9, RLIN12, RLIN19, RLIN22, and RUN23, which demonstrate that tubes having an initial region of constant helical pitch with a higher pitch than the pitch in the final region of constant helical pitch result in higher outlet temperatures. This is the complete opposite to tubes according to the invention, where a lower pitch in the initial region of constant helical pitch than in the final region of constant helical pitch gives the highest outlet temperatures. As can be seen from RUN4, 75 mm diameter tubes having a lower pitch in the initial region of constant helical pitch results in a lower outlet temperature.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The invention is not restricted to the details of any foregoing embodiments. The invention is defined by the claims.

## Claims

1. A steel tube for use in cracking hydrocarbons at high temperature, wherein the steel tube has a fin formed on the inner wall of the tube, the fin extending continuously in a helical direction across at least a portion of the axial length,
**characterized in that** the fin comprises an initial region of constant helical pitch, an intermediary region of varying helical pitch, and a final region of constant helical pitch.

2. The steel tube of claim 1, wherein the fin extends for the entire axial length of the tube.

3. The steel tube of claim 1 or claim 2, wherein the initial region of constant helical pitch is between 1D and 40D in length, where D is the internal diameter of the tube.

4. The steel tube of any preceding claim, wherein the final region of constant helical pitch is between 1D and 40D in length, where D is the internal diameter of the tube.

5. The steel tube of any preceding claim, wherein the region of variable helical pitch is a length that is at least 80% of the axial length of the tube.

6. The steel tube of any preceding claim, wherein the region of variable helical pitch is a length that is at least 50% of the axial length of the tube.

7. The steel tube of any preceding claim, wherein the pitch of the fin in the region of varying helical pitch increases from its beginning to its end.

8. The steel tube of claim 7, wherein the increase in pitch is constant along the axial length of the region of varying pitch.

9. The steel tube of any preceding claim, wherein the overall change in helical pitch from the start of the tube to the end of the tube is greater than 0.2D, where D is the internal diameter of the tube.

10. The steel tube of any preceding claim, wherein the cross-sectional profile of the wall of the tube is circular in shape.

11. The steel tube of any preceding claim, wherein the height of the fin is approximately constant along its axial length.

12. The steel tube of any preceding claim, wherein the tube has an internal diameter in the range of 20 mm to 100 mm.

13. The steel tube of any preceding claim, wherein the tube has an internal diameter in the range of 20 mm to 70 mm.

14. The steel tube of any preceding claim, wherein the cross-section of the fin is semi-circular.

## Patentansprüche

1. Stahlrohr zur Verwendung beim Cracken von Kohlenwasserstoffen bei hoher Temperatur, wobei das Stahlrohr eine an der Innenwand des Rohrs ausgebildete Rippe aufweist, wobei sich die Rippe kontinuierlich in einer Spiralrichtung über mindestens einen Abschnitt der axialen Länge erstreckt,
**dadurch gekennzeichnet, dass** die Rippe eine Anfangsregion mit konstanter Spiralsteigung, eine Zwischenregion mit variierender Spiralsteigung und eine Abschlussregion mit konstanter Spiralsteigung umfasst.

2. Stahlrohr nach Anspruch 1, wobei sich die Rippe über die gesamte axiale Länge des Rohrs erstreckt.

3. Stahlrohr nach Anspruch 1 oder Anspruch 2, wobei die Anfangsregion mit konstanter Spiralsteigung eine Länge zwischen 1D und 40D aufweist, wobei D der Innendurchmesser des Rohrs ist.

4. Stahlrohr nach einem vorhergehenden Anspruch, wobei die Abschlussregion mit konstanter Spiralsteigung eine Länge zwischen 1D und 40D aufweist, wobei D der Innendurchmesser des Rohrs ist.

5. Stahlrohr nach einem vorhergehenden Anspruch, wobei die Region mit variabler Spiralsteigung eine Länge aufweist, die mindestens 80 % der axialen Länge des Rohrs beträgt.

6. Stahlrohr nach einem vorhergehenden Anspruch, wobei die Region mit variabler Spiralsteigung eine Länge aufweist, die mindestens 50 % der axialen Länge des Rohrs beträgt.

7. Stahlrohr nach einem vorhergehenden Anspruch, wobei die Steigung der Rippe in der Region mit variierender Spiralsteigung von ihrem Beginn zu ihrem Ende zunimmt.

8. Stahlrohr nach Anspruch 7, wobei die Zunahme der Steigung entlang der axialen Länge der Region mit variierender Steigung konstant ist.

9. Stahlrohr nach einem vorhergehenden Anspruch, wobei die Gesamtänderung der Spiralsteigung von dem Start des Rohrs zu dem Ende des Rohrs mehr als 0,2D beträgt, wobei D der Innendurchmesser des Rohrs ist.

10. Stahlrohr nach einem vorhergehenden Anspruch, wobei das Querschnittsprofil der Wand des Rohrs kreisförmig ist.

11. Stahlrohr nach einem vorhergehenden Anspruch, wobei die Höhe der Rippe entlang ihrer axialen Länge ungefähr konstant ist.

12. Stahlrohr nach einem vorhergehenden Anspruch, wobei das Rohr einen Innendurchmesser im Bereich von 20 mm bis 100 mm aufweist.

13. Stahlrohr nach einem vorhergehenden Anspruch, wobei das Rohr einen Innendurchmesser im Bereich von 20 mm bis 70 mm aufweist.

14. Stahlrohr nach einem vorhergehenden Anspruch, wobei der Querschnitt der Rippe halbkreisförmig ist.

## Revendications

1. Tube en acier destiné à être utilisé pour le craquage d'hydrocarbures à haute température, ledit tube en acier comportant une ailette formée sur la paroi interne du tube, ladite ailette s'étendant de manière continue dans un sens hélicoïdal sur au moins une partie de la longueur axiale,
**caractérisé en ce que** l'ailette comprend une zone initiale à pas hélicoïdal constant, une zone intermédiaire à pas hélicoïdal variable et une zone finale à pas hélicoïdal constant.

2. Tube en acier selon la revendication 1, ladite ailette s'étendant sur toute la longueur axiale du tube.

3. Tube en acier selon la revendication 1 ou la revendication 2, ladite zone initiale de pas hélicoïdal constant présentant une longueur comprise entre 1D et 40D, où D représente le diamètre interne du tube.

4. Tube en acier selon l'une quelconque des revendications précédentes, ladite zone finale à pas hélicoïdal constant présentant une longueur comprise entre 1D et 40D, où D représente le diamètre interne du tube.

5. Tube en acier selon l'une quelconque des revendications précédentes, ladite zone à pas hélicoïdal variable présentant une longueur qui représente au moins 80 % de la longueur axiale du tube.

6. Tube en acier selon l'une quelconque des revendications précédentes, ladite zone à pas hélicoïdal variable présentant une longueur qui représente au moins 50 % de la longueur axiale du tube.

7. Tube en acier selon l'une quelconque des revendications précédentes, ledit pas de l'ailette dans la zone de pas hélicoïdal variable augmentant de son début à son extrémité.

8. Tube en acier selon la revendication 7, ladite augmentation du pas étant constante le long de la longueur axiale de la zone à pas variable.

9. Tube en acier selon l'une quelconque des revendications précédentes, la variation globale du pas hélicoïdal du début du tube à l'extrémité du tube étant supérieure à 0,2D, où D représente le diamètre interne du tube.

10. Tube en acier selon l'une quelconque des revendications précédentes, le profil de section transversale de la paroi du tube étant de forme circulaire.

11. Tube en acier selon l'une quelconque des revendications précédentes, la hauteur de l'ailette étant approximativement constante sur sa longueur axiale.

12. Tube en acier selon l'une quelconque des revendications précédentes, ledit tube comportant un diamètre interne compris entre 20 mm et 100 mm.

13. Tube en acier selon l'une quelconque des revendications précédentes, ledit tube comportant un diamètre interne compris entre 20 mm et 70 mm.

14. Tube en acier selon l'une quelconque des revendications précédentes, ladite section transversale de l'ailette étant semi-circulaire.
